(19) Europäisches Patentamt
European Patent Office
Office européen des brevets

(11) EP 1 878 999 A1

(12) **EUROPEAN PATENT APPLICATION**

(43) Date of publication:
**16.01.2008 Bulletin 2008/03**

(51) Int Cl.:
***G01C 19/72*** *(2006.01)*

(21) Application number: **07106155.0**

(22) Date of filing: **13.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **14.07.2006 US 457680**

(71) Applicant: **Honeywell International Inc.**
**Morristown, NJ 07962 (US)**

(72) Inventor: **Wilfinger, Raymond J**
**Palm Harbor, FL 34685-1040 (US)**

(74) Representative: **Haley, Stephen**
**Gill Jennings & Every LLP**
**Broadgate House**
**7 Eldon Street**
**London EC2M 7LH (GB)**

(54) **Semiconductor substrate for interferometer fiber optic gyroscopes**

(57)     A method for forming an interferometer is disclosed. The method involves forming a ring interferometer and fiber optic gyroscope on a single semiconductor substrate.

FIG. 1

## Description

The U.S. Government may have certain rights in the present invention under contract no. N00030-05-C-0007 (Prime) and DL-H-551019 (Subcontract) awarded by the United States Navy.

A fiber optic gyroscope (FOG) contains a coil (for example, up to 2 miles) of wound optical fiber. FOGS measure angular rotation by determining the phase difference in light waves that propagates in opposite directions through the coil of optical fiber. Light waves that propagate through the coil in the opposite direction of the rotation take a shorter time than light waves that propagate in the direction of rotation.

Typically, an optical system with a beam splitter directs two light beams on a photodetector. With a zero attitude rate, the phase shift between the two beams is 180°; the two beams cancel each other and output photocurrent is minimized. FOGs provide extremely precise rotational rate information, due in part to a lack of cross-axis sensitivity to vibration, acceleration, and shock. FOGs will typically show higher resolution than a traditional ring laser gyroscope, and are commonly used to measure rotation in navigation applications such as aircraft, missiles, satellites, and other vehicles.

With the attitude rate oriented along the fiber (that is, around the coil's axis) the original phase shift changes. This phase shift change occurs because of an increase in the light path for one beam and a decrease in the light path for another beam. As a result, the photodetectors current responds to the increased illumination and becomes larger. This is typically known as the Sagnac effect.

The Sagnac effect is illustrated in what is commonly referred to as ring interferometry. Similar to the FOG, ring interferometry involves a beam of light (for example, a laser) split into two beams. The two beams are made to follow a trajectory in opposite directions. To act as a ring, the trajectory must enclose an area. In normal laser operation, light inside the laser cavity is several frequencies at first, and one frequency quickly outperforms other frequencies (after that the light is monochromatic). The frequency that outperforms the others fits well in the laser cavity; a multiple of its wavelength is the length of the cavity. When a ring laser is rotating, the effective path lengths of the two counter-propagating beams of laser light are different. At this point, the laser process generates two frequencies of laser light. The two resulting frequencies are such that at all times, the same number of cycles exist in both directions of propagation (that is, a standing wave). This standing wave is stationary with respect to the local inertial frame of reference when the ring laser is not rotating. The standing wave is also stationary with respect to the local inertial frame of reference when the ring laser interferometer is rotating. This property makes the ring interferometer the electronic counterpart of a mechanical gyroscope.

Combining a ring interferometer with a FOG currently involves integrating a separate laser source/detector and the coil of optical fiber with a wave guide for the two light beams. Such a combination requires numerous mechanical connections. The additional interactions involved lead to decreased reliability and is prone to numerous usability and capability issues (for example, more frequent calibrations). Also, the end product is typically bulky with demanding operating requirements (for example, energy consumption). These characteristics are not conducive to many present and future applications.

The following specification addresses recording orientation with an electronic device. Particularly, in one embodiment, a method for forming an interferometer is provided. The method involves forming a ring interferometer and a fiber optic gyroscope on a single semiconductor substrate.

These and other features, aspects, and advantages will become better understood with regard to the following description, appended claims, and accompanying drawings where:

FIG. 1 is a block diagram of an embodiment of an electronic package assembly incorporating an interferometer fiber optic gyroscope;

FIG. 2 is a block diagram of an embodiment of an interferometer fiber optic gyroscope;

FIG. 3 is a cross-sectional view of an embodiment of a wave guide for an interferometer fiber optic gyroscope shown in a partially-formed state with a substrate structure comprising at least one semiconductor substrate layer;

FIG. 4 is a cross-sectional view of the substrate structure of FIG. 3 comprising an enclosed wave guide formed on the at least one semiconductor substrate layer;

FIG. 5 is a cross-sectional view of an embodiment of a light source for an interferometer fiber optic gyroscope shown in a partially-formed state with a substrate structure comprising a compound junction and at least one semiconductor substrate layer;

FIG. 6 is a cross-sectional view of the substrate structure of FIG. 5 with at least one additional masking layer formed on the at least one semiconductor substrate layer;

FIG. 7 is a cross-sectional view of the substrate structure of FIG. 6 with at least one additional doping layer formed on the at least one semiconductor substrate layer;

FIG. 8 is a cross-sectional view of the substrate structure of FIG. 7 with an additional metallization layer formed on the at least one semiconductor substrate layer;

FIG. 9 is a cross-sectional view of an embodiment of a light detector for an interferometer fiber optic gyroscope shown in a partially-formed state with a substrate structure comprising a compound junction and at least one semiconductor substrate layer;

FIG. 10 is a cross-sectional view of the substrate structure of FIG. 9 with at least one additional masking layer formed on the at least one semiconductor substrate layer;

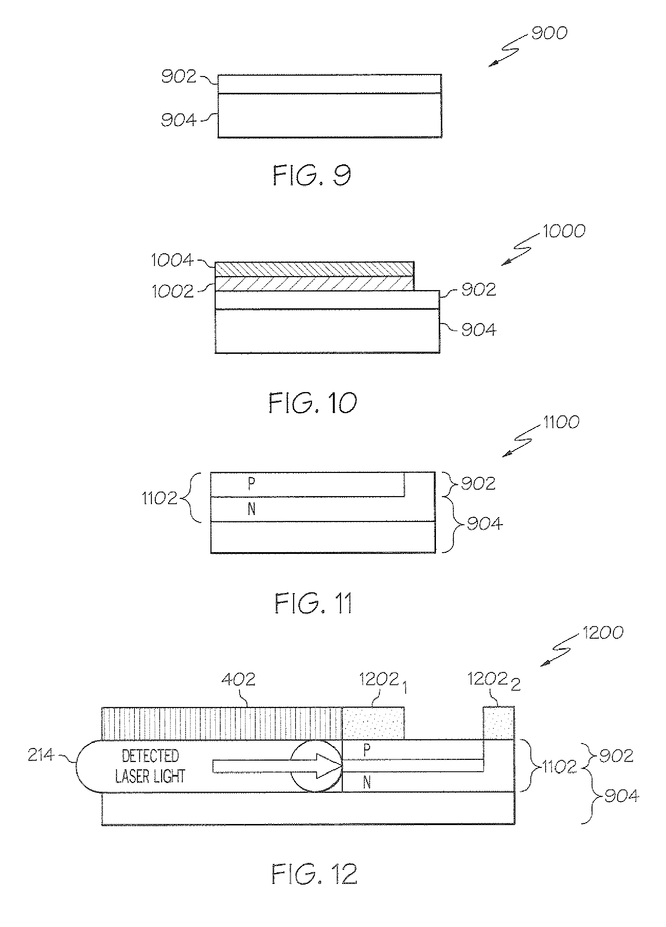

FIG. I 1 is a cross-sectional view of the substrate structure of FIG. 10 with at least one additional doping layer formed on the at least one semiconductor substrate layer;

FIG. 12 is a cross-sectional view of the substrate structure of FIG. 11 with an additional metallization layer formed on the at least one semiconductor substrate layer; and

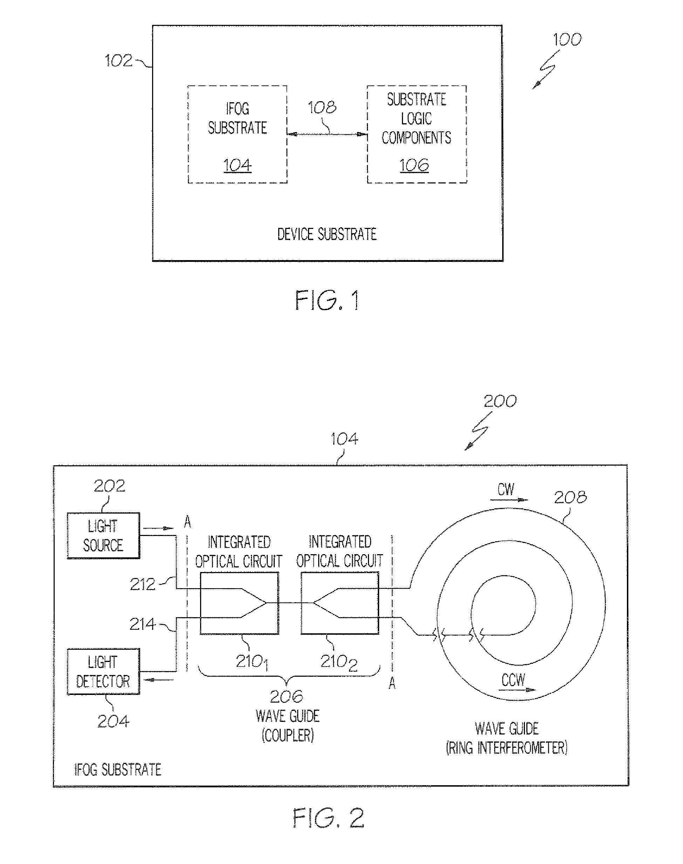

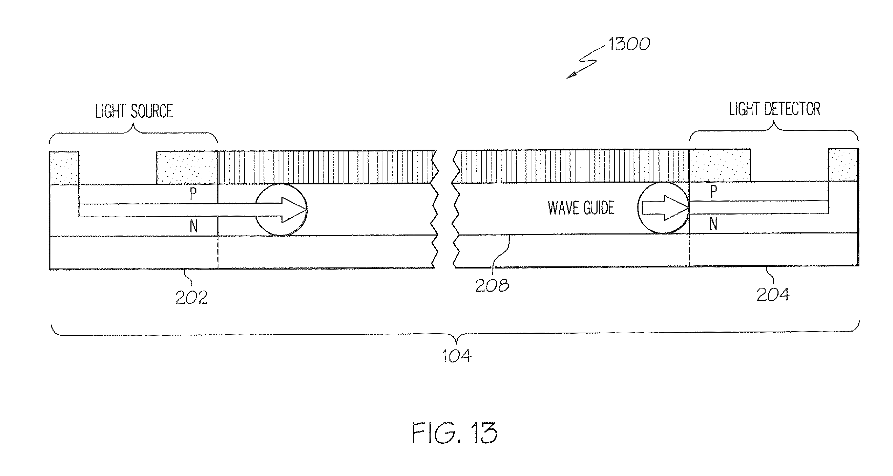

FIG. 13 is a cross-sectional view of an embodiment of the substrate structure of FIG. 2; and

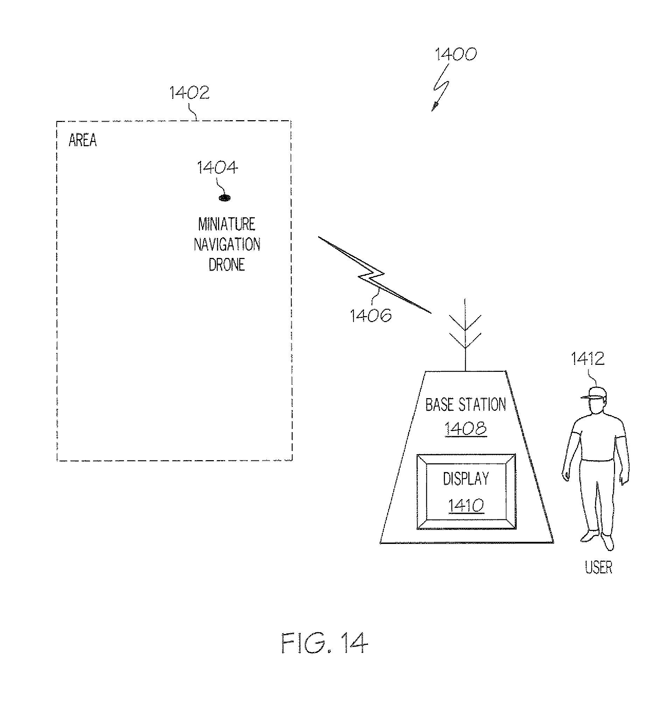

FIG. 14 is a block diagram of an embodiment of a system for recording orientation with an electronic device.

Like reference numbers and designations in the various drawings indicate like elements.

The following detailed description discusses at least one embodiment for combining a ring interferometer with a fiber optic gyroscope on a semiconductor substrate. This combination is referred to as an interferometer fiber optic gyroscope (IFOG). Advantageously, the IFOG serves as a building block in conjunction with peripheral electronics on the same semiconductor substrate. The final result is a miniaturized gyroscope for a plurality of applications that require navigation-related data from a measurement device. Application possibilities range from unaccompanied navigation drones and ballistic trajectory measurement sensors to physiological data recorders for anatomy studies.

FIG. 1 is a block diagram of an embodiment of an electronic package assembly 100 incorporating an IFOG. Electronic package assembly 100 comprises device substrate 102, IFOG substrate 104, and substrate logic components 106. Examples of electronic package assembly 100 include any logic device such as an application-specific integrated circuit (ASIC) and the like. Device substrate 102 is composed of electrically conductive material known to one of skill in the art of conventional semiconductor wafer fabrication. IFOG substrate 104 resides within device substrate 102 and is in communication with substrate logic components 106 along communication interface 108. Substrate logic components 106 include, but are not limited to, peripheral electronic components known to one of skill in the art. For example, substrate logic components 106 include resistors, transistors, capacitors, inductors, etc. formed on one or more semiconductor chip die substrates using conventional semiconductor wafer fabrication methods. It is noted that for simplicity in description, a single IFOG substrate 104 is shown in FIG. 1. However, it is understood that device substrate 102 is capable of accommodating any appropriate number of IFOG substrates 104 (for example, at least one IFOG substrate in a single device substrate 102). IFOG substrate 104 is described in further detail below with respect to FIG. 2.

In operation, electronic package assembly 100 is incorporated into one or more electronic devices. The one or more electronic devices (one example, electronic device 1404, is provided below with respect to FIG. 14) will measure location and orientation with the capabilities provided by IFOG substrate 104. In one implementation, electronic device 1404 retains a form factor suitable for use in applications requiring miniaturized navigational aids and operates with a minimal amount of power. Electronic package assembly 100 is suitable for packaging in a variety of electronic devices, such as low power navigation drones, ballistic tracing equipment, tracking aids for internal medicine, and the like. Incorporating the necessary components for an interferometer fiber optic gyroscope in IFOG substrate 104 eliminates integrating separate components (for example, a separate light source and detector with a separate length of optical fiber) into a hybrid system or device.

FIG. 2 is a cross-sectional view 200 of an embodiment of IFOG substrate 104. IFOG substrate 104 comprises light source 202, light detector 204, wave guide coupler 206, and ring interferometer wave guide 208. In the example embodiment of FIG. 2, wave guide coupler 206 further includes integrated optical circuits (IOCs) $210_1$ and $210_2$. In one implementation, each of IOCs $210_1$ and $210_2$ serve as beam splitters to direct a single light beam in at least two separate and opposite directions. Light source wave guide 212 couples light source 202 to IOC $210_1$. Light detector wave guide

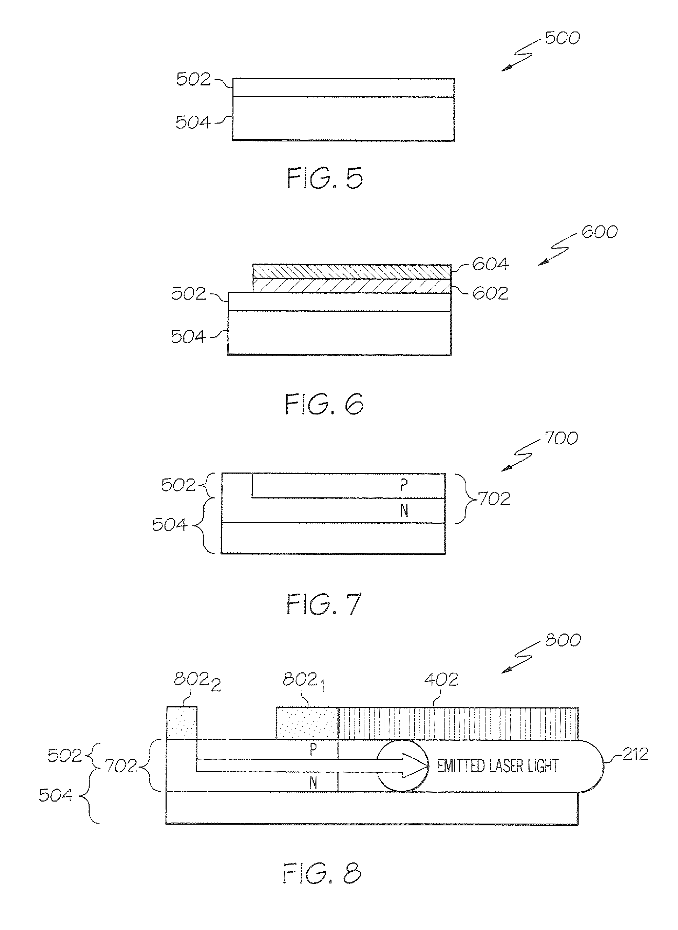

214 couples IOC $210_1$ to light detector 204. IOC $210_2$ is coupled to each end of ring interferometer wave guide 208. In one implementation, IOC $210_2$ is a mirror image of IOC $210_1$ (as illustrated in FIG. 2). Alternate implementations for wave guide coupler 206 are possible. Light source 202 (light detector 204) is fabricated within IFOG substrate 104 using standard semiconductor wafer fabrication processes, as further described below with respect to FIGS. 5 (9), 6 (10), 7 (11), and 8 (12). In the example embodiment of FIG. 2, wave guide coupler 206, ring interferometer wave guide 208, light source wave guide 212. and light detector wave guide 214 form at least one continuous fiber-equivalent optical wave guide. In one implementation, the at least one continuous fiber-equivalent optical wave guide does not consist of optical fiber.

In the example embodiment of FIG. 2, ring interferometer wave guide 208 consists of a length of concentric coils whose shape is fitted to represent a ring interferometer. The length of concentric coils of ring interferometer wave guide 208 is at least a portion of the at least one continuous fiber-equivalent optical wave guide discussed above. In one implementation, the length of concentric coils of ring interferometer wave guide 208 reside in one or more semiconductor substrate layers for coupling with wave guide coupler 206 (as illustrated in FIG. 2). In alternate implementations, the length of concentric coils of ring interferometer wave guide 208 (along with light source 202, wave guide coupler 206, light source wave guide 212 and light detector wave guide 214) reside in a particular plane (for example, the x-y plane) and light detector 204 resides in a separate plane (for example, the z-plane) of a single semiconductor substrate layer.

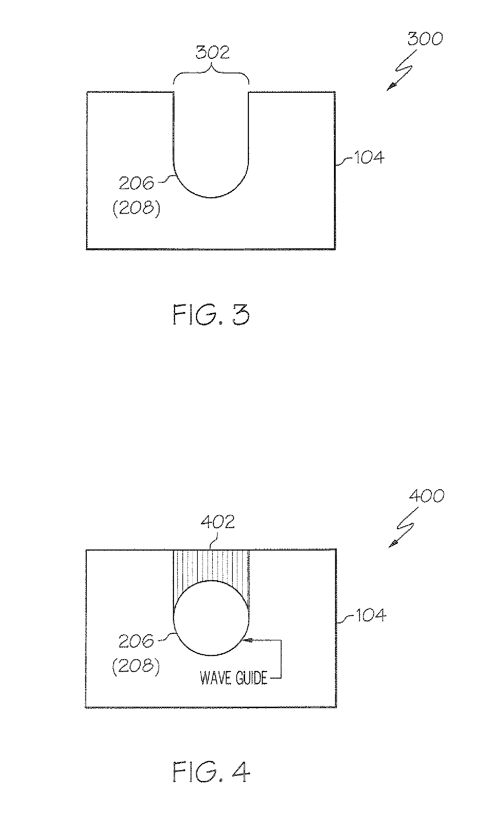

Wave guide coupler 206, ring interferometer wave guide 208, light source wave guide 212, and light detector wave guide 214 are formed by one or more electron-beam etching processes. At least one electron-beam etching process is described in further detail below with respect to FIGS. 3 and 4. A cross-sectional view of IFOG substrate 104 along line AA is illustrated in further detail below with respect to FIG. 13.

In operation, IFOG substrate 104 receives electrical power to activate light source 202. Light source 202 emits a light beam along light source wave guide 212 and into wave guide coupler 206. IOC $210_2$ splits the emitted light beam into two beams traveling in a clockwise (CW) and counter-clockwise (CCW) direction (as illustrated) through ring interferometer wave guide 208. Ring interferometer wave guide 208 encompasses an optical path represented by an area vector $\vec{A}$. Wave guide coupler 206 separates the previously-emitted light beam in IOC $210_1$ from at least one returning light beam of ring interferometer wave guide 208. Once light detector 204 detects the at least one returning light beam on light detector wave guide 214, IFOG substrate 104 establishes a rotational rate vector F . After traveling through ring interferometer wave guide 208, the at least one returning light beam experiences a phase shift (phase differential) illustrated by Equation 1 below:

$$(\text{Equation 1}) \qquad \Delta\Phi R = \frac{4\omega}{c^2}\, \vec{A} \bullet \vec{r}$$

With respect to Equation 1 above, $\Delta\Phi R$ represents a phase differential between the emitted light beam of light source 202 and the at least one returning light beam, $\omega$ represents an angular frequency of the emitted light beam of light source 202, and $c$ represents velocity of light in a vacuum. $\Delta\Phi R$ is proportional to the rotational rate vector $\vec{r}$ combined vectorially with area vector $\vec{A}$. In one implementation, the phase differential is used to calculate the orientation of electronic device 1404 of FIG. 14. The length of the concentric coils of ring interferometer wave guide 208 controls sensitivity (that is, measurement resolution) of IFOG substrate 104 based on a magnitude of area vector $\vec{A}$. IFOG substrate 104 is suitable for large-scale semiconductor wafer integration. The construction of each major component of IFOG substrate 104 is described in further detail below with respect to FIGS. 3 to 12.

FIG. 3 is a cross-sectional view of an embodiment of wave guide 206 for IFOG substrate 104 shown in a partially-formed state with a substrate structure 300 comprising at least one semiconductor substrate layer. Substrate structure 300 comprises IFOG substrate 104, wave guide coupler 206 (ring interferometer wave guide 208), and trough opening 302. In the example embodiment of FIG. 3, a vapor deposition glass oxide creates wave guide coupler 206 (ring interferometer wave guide 208) and trough opening 302 using electron-beam etching. In the vapor deposition glass oxide process, substrate structure 300 is exposed to one or more volatile agents. The one or more volatile agents react to (for example, decompose) substrate structure 300 enough to produce wave guide coupler 206 (ring interferometer wave guide 208) and trough opening 302. Wave guide coupler 206 (ring interferometer wave guide 208) is formed as a rounded glass trough of a number of concentric coils created by the electron-beam etching process. The electron-beam etching process allows a direct image of wave guide coupler 206 (ring interferometer wave guide 208) to be formed without a mask as substrate structure 300 is modified by the etching process.

FIG. 4 is a cross-sectional view of a substrate structure 400 comprising an enclosed wave guide 206 formed on at least one semiconductor substrate layer. Substrate structure 400 further comprises capping material 402. As described above with respect to FIG. 3, wave guide coupler 206 (ring interferometer wave guide 208) is perfectly rounded on IFOG substrate 104 by the vapor deposition glass oxide and electron-beam etching processes. Wave guide coupler 206 (ring interferometer wave guide 208) is sealed with capping material 402. In the example embodiment of FIG. 4, capping material 402 is constructed of an N-P doping material, a metal layer, or the like.

FIG. 5 is a cross-sectional view of an embodiment of light source 202 for IFOG substrate 104 shown in a partially-formed state with a substrate structure 500 comprising a compound junction and at least one semiconductor substrate layer. Substrate structure 500 further comprises at least one field oxide layer 502 and at least one semiconductor substrate layer 504. The at least one field oxide layer 502 serves as at least one doping layer when light source 202 is fabricated.

FIG. 6 is a cross-sectional view of a substrate structure 600 with an additional masking layer formed on the at least one semiconductor substrate layer 504 of FIG. 5. Substrate structure 600 further comprises at least one semiconductor dioxide layer 602 and at least one masking layer 604. The at least one semiconductor dioxide layer 602 and the at least one masking layer 604 are deposited during a series of patterning and layering operations that define a location of light source 202 on IFOG substrate 104.

FIG. 7 is a cross-sectiorlal view of a substrate structure 700 with at least one additional doping layer formed on the at least one semiconductor substrate layer 504 of FIG. 5. Substrate structure 700 further comprises source P-N junction 702. Source P-N junction 702 is formed during at least one doping operation performed on substrate layer 600. The at least one doping operation creates a plurality of pockets in substrate structure 700 that are either rich in electrons (N-type) or rich in electron holes (P-type). The plurality of pockets forms an electricaily-active region.

FIG. 8 is a cross-sectional view of a substrate structure 800 with an additional metallization layer formed on the at least one semiconductor substrate layer 504 of FIG. 5. Substrate structure 800 further comprises metallization layer 802, shown as $802_1$ and $802_2$. In the example embodiment of FIG. 8, substrate structure 800 represents light source 202 and light source wave guide 212, with light source wave guide 212 enclosed by capping material 402. Metallization layer 802 forms during an additional layering operation that provides an electrical connection for light source 202 in at least one design pattern of IFOG substrate 104. In the example embodiment of FIG. 8, light source 202 comprises a laser diode on IFOG substrate 104.

In operation, electrical current passes through substrate structure 800 from metallization layer $802_1$ to metallization layer $802_2$. The electrical current flows through source P-N junction 702 from P-layer to N-layer, releasing electrical energy that creates a plurality of photons. The plurality of photons emit laser light into light source wave guide 212 (as illustrated). The emitted laser light from light source 202 is transferred to light detector 204 as described above with respect to FIG. 2.

FIG. 9 is a cross-sectional view of an embodiment of light detector 204 for IFOG substrate 104 shown in a partially-formed state with a substrate structure 900 comprising a compound junction and at least one semiconductor substrate layer. Substrate structure 900 further comprises at least one field oxide layer 902 and at least one semiconductor layer 904. The at least one field oxide layer 902 serves as at least one doping layer when light detector 204 is fabricated.

FIG. 10 is a cross-sectional view of substrate structure 1000 with at least one additional masking layer formed on the at least one semiconductor substrate layer 904 of FIG. 9. Substrate structure 1000 further comprises at least one semiconductor dioxide layer 1002 and at least one masking layer 1004. The at least one semiconductor dioxide layer 1002 and the at least one masking layer 1004 are deposited during a series of patterning and layering operations that define a location of light detector 1002 on IFOG substrate 104.

FIG. 11 is a cross-sectional view of substrate structure 1100 with at least one additional doping layer formed on the at least one semiconductor substrate layer 904 of FIG. 9. Substrate structure 1100 further comprises source P-N junction 1102. Source P-N junction 1102 is formed during at least one doping operation performed on substrate layer 1000. The at least one doping operation creates a plurality of pockets in substrate structure 1100 that are either rich in electrons (N-type) or rich in electron holes (P-type). The plurality of pockets forms an electrically-active region.

FIG. 12 is a cross-sectional view of substrate structure 1200 with an additional metallization layer formed on the at least one semiconductor substrate layer 904 of FIG. 9. Substrate structure 1200 further comprises metallization layer 1202, shown as $1202_1$ and $1202_2$. In this example embodiment, substrate structure 1200 represents light detector 204 and light detector wave guide 214, with light detector wave guide 214 enclosed by capping material 402. Metallization layer 1202 forms during an additional layering operation that provides an electrical connection for light detector 204 in at least one design pattern of IFOG substrate 104. In this example embodiment, light detector 204 comprises a photodiode on IFOG substrate 104.

In operation, light detector 204 detects returning laser light from light detector wave guide 214 (as illustrated). The returning laser light from light detector wave guide 214 flows into detector P-N junction 1102, absorbing the plurality of photons described earlier with respect to FIG. 8. Light detector 204 produces a photocurrent (that is, an electrical current) passing through metallization layer $1202_1$ to metallization layer $1202_2$. In this example embodiment, assembly 100 processes the photocurrent for at least one IFOG measurement.

FIG. 13 is a cross-sectional view of an embodiment of the substrate structure 1300 along line AA of FIG. 2 (IFOG substrate 104). Substrate structure 1300 comprises light source (source diode) 202, light detector (detector diode) 204 and ring interferometer wave guide 208. As described above with respect to FIGS. 3 to 12, substrate structure 1300 is fabricated with one or more standard semiconductor wafer processes (for example, one or more silicon wafer fabrication methods). Alternate methods of fabricating substrate structure 1300 comprise a heterojunction composed of one or more layers of one or more dissimilar semiconductor material. The one or more dissimilar semiconductor materials have non-equal bandgaps (that is, energy differences between junctions). In one implementation, a sequence of aluminum gallium arsenide - gallium arsenide - aluminum gallium arsenide (AlGaAs - GaAs - AlGaAs) form a double heterojunction. With a heterojunction, characteristics of modem laser diodes (for example, source diode 600 and detector diode 1200) closely approach those of an idealized diode. Furthermore, diode model parameters for source diode 600 and detector diode 1200 that define the diode current vs. voltage response are tunable by adjusting the thicknesses and bandgaps of the one or more layers of dissimilar semiconductor material.

FIG. 14 is a block diagram of an embodiment of a system 1400 for recording data with an electronic device. System 1400 comprises area 1402, electronic device 1404, base station 1408, and user 1412. In this example embodiment, base station 1408 further comprises display 1410. Electronic device 1404 comprises electronic package assembly 100, including at least one IFOG substrate 104, as described earlier with respect to FIG. 1. Examples of electronic device 1404 include, without limitation, a miniature camera, a miniature navigation drone, and a minute remote sensor suitable for providing base station 1408 with navigation-related data surrounding or within area 1402. In one implementation, electronic device 1404 is appropriately sized (for example, the size of a common housefly or a bumblebee) for unrestricted travel within area 1402. Electronic device 1404 is self-powered and travels throughout area 1402, continuously recording navigation-related data. One example of navigation-related data is a position estimate to be determined by electronic device 1404. Another example of navigation-related data is an estimate of an attribute related to motion within area 1402 (for example, the distance traveled, velocity, acceleration, location, etc.)

Electronic device 1404 transmits the navigation-related data along wireless transmission link 1406. Wireless transmission link 1406 comprises secure wireless communication transmissions between electronic device 1404 and base station 1408. Communication between electronic device 1404 and base station 1408 over wireless transmission link 1406 occurs when electronic device 1404 is sufficiently close to base station 1408. In one implementation, display 1410 displays the navigation-related data in real time to user 1412. In other implementations, alternate methods for conveying the navigation-related data include a database, a network server, and the like.

The methods and techniques described here may be implemented in digital electronic circuitry, or with a programmable processor (for example, a special-purpose processor or a general-purpose processor such as a computer) firmware, software, or in combinations of them. An apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magnetooptical disks; and DVDs. Any of the foregoing may be supplemented by, or incorporated in, electronic package assembly 100 of FIG. 1.

## Claims

1. A gyroscope (1404), comprising:

   a ring interferometer (104) formed in a substrate (102); and
   a fiber optic gyroscope formed in the same substrate (102) and in communication with the ring interferometer.

2. The gyroscope (1404) of claim 1, wherein the ring interferometer (104) further comprises:

   at least one fiber-equivalent optical wave guide (208);
   a light source (202) coupled to the at least one fiber-equivalent optical wave guide (208);
   a light detector (204) coupled to the same at least one fiber-equivalent optical wave guide (208); and
   wherein the light source (202) and the light detector (208) are coupled to the at least one fiber-equivalent optical wave guide (208) with one or more integrated optical circuits (210).

3. The gyroscope (1404) of claim 2, wherein the at least one fiber-equivalent optical wave guide (208) further comprises a series of concentric coils created by electron-beam etching.

4. The gyroscope (1404) of claim 3, wherein a length of the series of concentric coils controls sensitivity of the ring interferometer (104).

5. The gyroscope (1404) of claim 2, wherein the at least one fiber-equivalent optical wave guide (208) further comprises at least one wave guide trough (206) created with a vapor deposition glass oxide.

6. The gyroscope (1404) of claim 2, wherein the light source (202) further comprises a laser diode.

7. The gyroscope (1404) of claim 2, wherein the light detector (204) further comprises a photodiode.

8. The gyroscope (1404) of claim 2, wherein the at least one fiber-equivalent optical wave guide (208), the light source (202), and the light detector (204) are formed on a single substrate layer.

9. The gyroscope (1404) of claim 1, wherein the substrate (102) further comprises a device substrate for an application-specific integrated circuit.

102 ~

| IFOG SUBSTRATE <u>104</u> | 108 | SUBSTRATE LOGIC COMPONENTS <u>106</u> |

DEVICE SUBSTRATE

100

FIG. 1

200

104

LIGHT SOURCE
202

LIGHT DETECTOR
204

A

212

214

INTEGRATED OPTICAL CIRCUIT

INTEGRATED OPTICAL CIRCUIT

$210_1$

$210_2$

CW

208

CCW

A

206
WAVE GUIDE
(COUPLER)

WAVE GUIDE
(RING INTERFEROMETER)

IFOG SUBSTRATE

FIG. 2

302

300

104

206
(208)

FIG. 3

400

402

104

206
(208)

WAVE GUIDE

FIG. 4

9

500

502

504

FIG. 5

600

604

602

502

504

FIG. 6

700

502 {

504 {

P

N

702

FIG. 7

800

$802_2$

$802_1$

402

502 { 702

504 {

P

N

EMITTED LASER LIGHT

212

FIG. 8

900

902
904

FIG. 9

1000

1004
1002
902
904

FIG. 10

1100

1102
P
N
902
904

FIG. 11

1200

402
1202₁
1202₂

214
DETECTED
LASER LIGHT
P
N
1102
902
904

FIG. 12

LIGHT SOURCE

LIGHT DETECTOR

1300

P

N

WAVE GUIDE

P

N

202

208

204

104

FIG. 13

EP 1 878 999 A1

1400

1402

AREA

1404

MINIATURE
NAVIGATION
DRONE

1406

BASE STATION
1408

DISPLAY
1410

1412

USER

FIG. 14

**European Patent Office**

**EUROPEAN SEARCH REPORT**

Application Number

EP 07 10 6155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 05 034164 A (JAPAN AVIATION ELECTRON) 9 February 1993 (1993-02-09) * the whole document * ----- | 1-9 | INV. G01C19/72 |
| X | SILVANO DONATI: "electro optical instrumentation" 2004, PRENTICE HALL , 6109 013061 , XP002438234 * page 290 - page 291; figure 7.25 * ----- | 1-9 | |
| P,X | US 7 106 448 B1 (VAWTER G ALLEN [US] ET AL) 12 September 2006 (2006-09-12) * the whole document * ----- | 1-9 | |

TECHNICAL FIELDS SEARCHED (IPC)

G01C
G02B

The present search report has been drawn up for all claims

| Place of search | Date of completion of the search | Examiner |
|---|---|---|
| Munich | 21 June 2007 | Yenidunya, Rifat |

**EP 1 878 999 A1**

**ANNEX TO THE EUROPEAN SEARCH REPORT
ON EUROPEAN PATENT APPLICATION NO.**

EP 07 10 6155

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2007

| Patent document cited in search report | | Publication date | Patent family member(s) | | Publication date |
|---|---|---|---|---|---|
| JP 5034164 | A | 09-02-1993 | JP | 2514488 B2 | 10-07-1996 |
| US 7106448 | B1 | 12-09-2006 | NONE | | |

EPO FORM P0459

For more details about this annex : see Official Journal of the European Patent Office, No. 12/82